# EUROPEAN PATENT APPLICATION

(11) **EP 1 363 464 A2**
(43) Date of publication of application: **19.11.2003**
(21) Application number: 03009887.5
(22) Date of filing: 15.05.2003
(51) Int. Cl.: H04Q 3/00

(54) **Triggerless call treatment service implementation in a telecommunications network**

(30) Priority: 15.05.2002 US 378038 P
(71) Applicant: ALCATEL, 75008 Paris (FR)
(72) Inventor: Bhardwaj, Ramesh K., Plano, TX 75023 (US); O'Toole, Maureen Rose, Plano, Texas 75025 (US); Lopes, Vincente Melillo de Souza, Plano, TX 75023 (US)
(74) Representative: Dreiss, Fuhlendorf, Steimle & Becker

(57) **Abstract**

A call treatment service implementation in a telecommunications network without triggering. Upon intercepting an incoming signaling message received at an STP on a selected linkset, a database provided with the STP is queried based on subscriber number information in the incoming message. Service logic at STP is operable to provide call treatment, including termination, based on the results obtained from the database.

## Description

### BACKGROUND OF THE INVENTION

### Technical Field of the Invention

The present invention generally relates to telecommunications networks. More particularly, and not by way of any limitation, the present invention is directed to a triggerless call treatment service implementation in a telecommunications network.

### Description of Related Art

Today, network operators have to contend with a variety of scenarios that pose significant challenges: rapid technological evolution, access to network by fraudulent users, diverse switching service providers, smuggling of international dialing services, lack of Signal Switching Point (SSP) functionality at most local switches, steady shrinkage of paying subscriber base, and ever-increasing competition, just to name a few. To address the concerns that arise from such challenges, network operators need a multitude of advanced network controls such as, for example, selective network access, real-time call validation, selective call blocking, filtering of illegal destinations, control of out-of-network customers, and the like. Current solutions in this regard, however, require costly upgrades in infrastructure in addition to having to deal with different technologies and vendors. Furthermore, service provisioning models in use today utilize a trigger-based approach to access advanced call processing capabilities which necessitates interaction with additional network elements possibly operated by third-parties.

### SUMMARY OF THE INVENTION

Accordingly, the present invention advantageously provides a call treatment service implementation in a telecommunications network without triggering. Upon intercepting an incoming signaling message received at a Signal Transfer Point (STP) on a selected linkset, a database provided with the STP is queried based on subscriber number information in the incoming message. Service logic at STP is operable to provide call treatment, including termination, based on the results obtained from the database.

In one aspect, the present invention is directed to a call treatment method for validating a calling number in a telecommunications network. A signaling message generated pursuant to a call originated by a party is received at an STP on a selected linkset. Responsive to the signaling message's contents, service logic is invoked at the STP, wherein the service logic operates to determine if a calling number associated with the party is within a predetermined length. Based on the determination, the call may be terminated, re-routed or continued.

In another aspect, the present invention is directed to a call treatment method based on Call Type of a call in a telecommunications network. Upon receiving a signaling message at an STP on a selected linkset, service logic is invoked thereat in order to obtain routing information based on the incoming call's Call Type. Call treatment, e.g., termination, re-routing, etc., is provided by the STP in accordance with the routing information. In one exemplary embodiment, the Call Types may include the following services: local dialing, long distance dialing, international dialing, 900-number services, 800-number services, carrier selection, and automatic collect calling.

In a further aspect, the present invention, is directed to a call treatment system and method in a telecommunications network that is operable without triggering. A signaling message generated pursuant to a call originated by a party is received at an STP on a selected linkset. Responsive to the signaling message's contents, service logic is invoked at the STP in order to obtain routing information from a local database. Call treatment with respect to the incoming call is provided by the STP depending on the routing information obtained from the local database. In an exemplary embodiment, the various operations set forth herein may be implemented in software, hardware, firmware, or in any equivalent structural and functional combination thereof.

In a still further aspect, the present invention is directed to a database system for storing data usable in effectuating a triggerless call Treatment service in a telecommunications network, wherein the database system is operable with an STP disposed in the network. A memory structure is operable to store a list of subscriber numbers, ranges of numbers, or both, each subscriber number or block of numbers having associated therewith at least one Release Cause value that is activatable in response to a call whose signaling message is received at the STP on a selected linkset. Another memory structure is provided for mapping the Release Cause value information to routing information relating to the call based on a conditionality with respect to the signaling message's contents. The conditionalities may comprise call number validation, Call Type determination, compliance with controlled lists for called parties, calling parties, or both, et cetera.

### BRIEF DESCRIPTION OF THE DRAWINGS

A more complete understanding of the present invention may be had by reference to the following Detailed Description when taken in conjunction with the accompanying drawings wherein:
FIG. 1 depicts a flow chart of the various operations of an embodiment of a call treatment method of the present invention;
FIG. 2A depicts an exemplary embodiment of a scheme for treating an incoming IAM message in accordance with the teachings of the present invention;
FIG. 2B depicts a flow chart of the various operations of another embodiment of a method of the present invention;
FIG. 3 depicts an exemplary Release Cause mapping scheme for use in accordance with the teachings of the present invention;
FIG. 4 depicts an exemplary embodiment of a database portion for use in conjunction with the teachings of the present invention;
FIG. 5 depicts an exemplary embodiment of another database portion for use in conjunction with the teachings of the present invention;
FIG. 6 depicts an exemplary embodiment of a telecommunications network portion for effectuating a triggerless call treatment system and method in accordance with the teachings of the present invention;
FIG. 7 depicts a flow chart of the various operations of an embodiment of a calling number validation method of the present invention; and
FIG. 8 depicts a flow chart of the various operations of an embodiment of a call treatment method of the present invention based on Call Type.

### DETAILED DESCRIPTION OF THE DRAWINGS

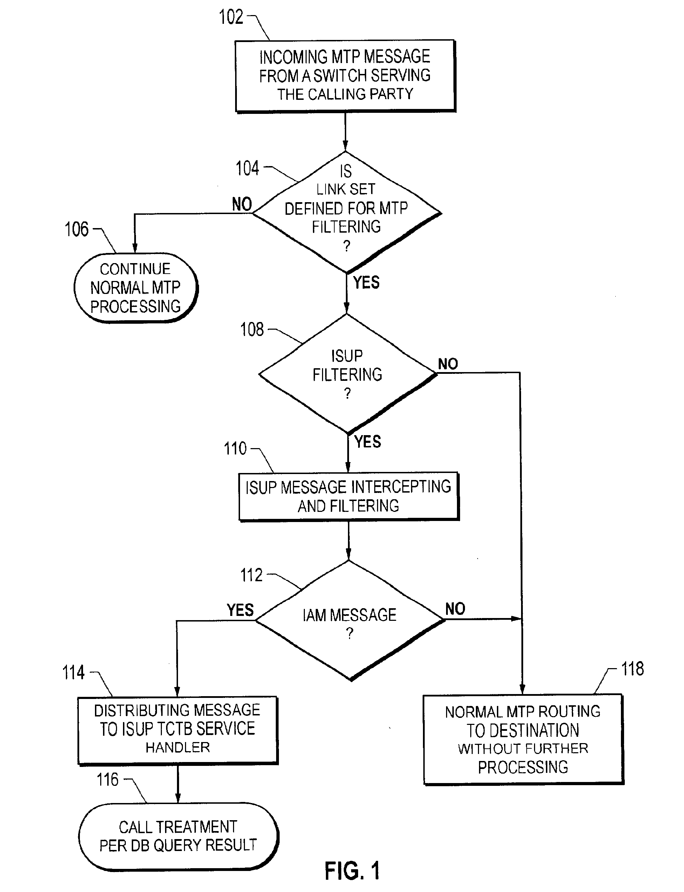

In the drawings, like or similar elements are designated with identical reference numerals throughout the several views thereof, and the various elements depicted are not necessarily drawn to scale. Referring now in particular to FIG. 1, depicted therein is a flow chart of an embodiment of a call treatment method of the present invention which provides call treatment service for incoming calls without triggering. Upon receiving at a Signal Transfer Point (STP) an incoming signaling message, i.e., a Signaling System No. 7 message such as the Message Transfer Part (MTP) message generated pursuant to a call, from a switch serving a calling party (block 102), a determination is made whether the linkset on which the message is received is defined for MTP message filtering (decision block 104). If the linkset is not defined for MTP message filtering, the received MTP message undergoes normal MTP processing in accordance with standard MTP routing procedures (block 106). On the other hand, if the linkset is enabled and provisioned for MTP filtering, a further examination is made (decision block 108) so as to determine if the MTP's Service Information Octet (SIO) is set to a particular SS7-compliant User Part, namely, the Integrated Services Digital Network (ISDN) User Part or ISUP. Where the MTP's SIO is set to "ISUP", ISUP message intercepting and filtering is enabled (block 110). Otherwise, normal MTP routing process will take place (block 118).

As part of the ISUP message filtration process, a determination is made as to the received ISUP message type (decision block 112). If the intercepted ISUP message is an Initial Address Message (IAM), the message is distributed to a service handler via a message distributor (block 114). As will be seen hereinbelow, service logic associated with the service handler is operable to query a database associated with the STP based on one or more subscriber parameters contained in the message and its Call Type. For purposes of the present patent application, a Call Type may be defined for any communications service performed for a subscriber, e.g., local calling, long distance calling, carrier selection, automatic collect calling (ACC), international dialing, 800 and 900 services, et cetera. A controlled service is a service of particular Call Type for which the service logic is invoked in order to determine appropriate call treatment based on database query. In one implementation, each controlled service may be identified by a Service Key of a predetermined number of digits that corresponds to a specific Call Type. By way of further exemplary implementation, the subscriber parameters may comprise the E.164 directory numbers associated with the calling party (CgPN), called party (CdPN), or both. Also, the service database may include several database portions, e.g., a database portion containing Single or Ranged E.164 numbers and restrictions associated therewith on accessing predefined controlled services, et cetera. Based on a result obtained from querying the database, the service logic of the call treatment service handler determines appropriate call treatment, e.g., call termination, re-routing and the like (block 116).

On the other hand, if the intercepted message is not an IAM message, the received message undergoes normal MTP routing based on its Destination Point Code (DPC) without further processing (block 118).

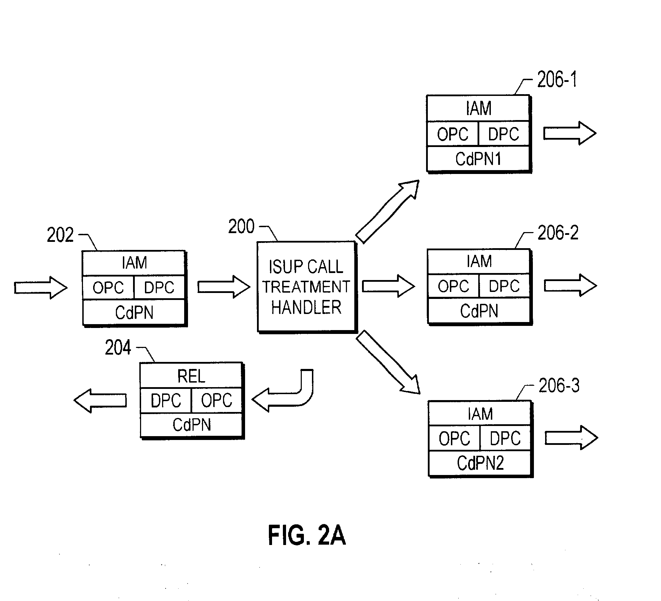

FIG. 2A depicts an exemplary embodiment of a scheme for treating an incoming IAM message 202 on an enabled linkset in accordance with the teachings of the present invention. The signaling message 202 comprises the ISUP IAM message, an Origination Point Code (OPC), a Destination Point Code (DPC) and Called Party Number (CdPN). Service logic associated with the ISUP call treatment service handler 200 is operable to query a local service database using CdPN. In one implementation, if CdPN belongs to a restricted number or range of numbers, the service logic is able to issue an ISUP Release (REL) message 204 towards the serving switch that originated the signaling message 202 so that the call may be terminated. In another implementation, a call restriction profile associated with CdPN may be such that when a call is placed to that number, it may be re-routed to one or more different destinations by modifying the downstream IAM messages. Accordingly, in general, where an incoming call is modified to be treated differently, the resulting effect may be deemed as "call blocking." On the other hand, where it is determined that no restrictions are applicable, the IAM message is simply forwarded to the called party's switch. In FIG. 2A, reference numerals 206-1 through 206-3 refer to these exemplary scenarios.

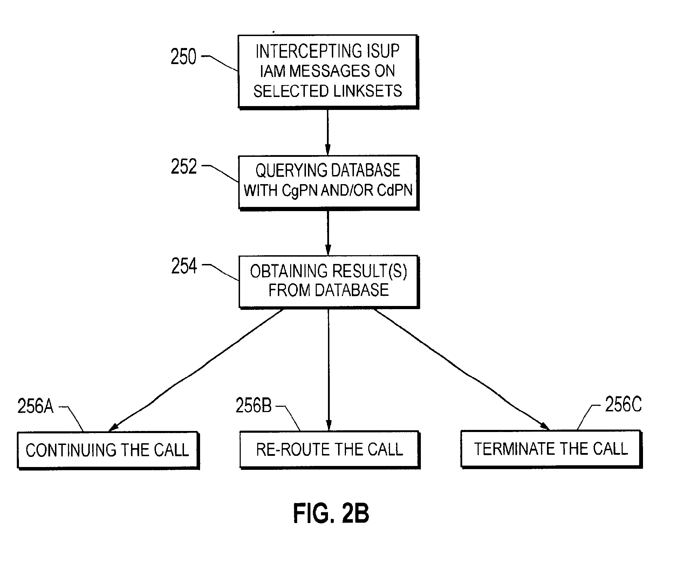

Referring now to FIG. 2B, depicted therein is a flow chart of the various operations involved in an ISUP call treatment service handling methodology of the present invention. Upon intercepting ISUP IAM messages on selected linksets (block 250), a service database is queried using CgPN and/or CdPN information associated with the incoming messages generated pursuant to a controlled service (block 252). Upon obtaining a result from the local service database (block 254), one or more response actions may be executed by the ISUP call treatment service handler functionality as part of its call treatment logic. As pointed out before, the call may be continued to its intended destination (block 256A), it may be re-routed to another destination (block 256B), or it may be blocked, i.e., terminated (block 256C).

Based on the foregoing, those skilled in the art will recognize that the call treatment service of the present invention provides for a triggerless provisioning of service, whereby the shortcomings and deficiencies associated with triggered services alluded to in the Background section of the present patent application are advantageously overcome. Moreover, the triggerless call treatment service may be implemented as part of a Flexible Routing (FR) service application architecture that is capable of supporting "plug-and-play" deployment of services by the network operators. Additional details regarding an embodiment of FR-based implementation of the call treatment service methodology and provisioning are provided in the following commonly owned co-pending patent application(s): (i) "Tiggerless Call Type Blocking System and Method in a Telecommunications Network," Application No. , filed (Attorney Docket Number: 1285-0126US), in the name(s) of: Vicente Melillo de Souza Lopes, Maureen Rose O'Toole and Ramesh K. Bhardwaj, cross-referenced hereinabove and incorporated by reference herein.

The local database system operable with the triggerless call treatment service of the present invention may preferably be provisioned with several types of data so that a variety of call treatment services can be implemented within the teachings contained herein. For example, the following databases may be provisioned within an integrated service application architecture: Calling Line Identity Verification (CLIV) database, International Mobile Station Identity (IMSI) database, E.164 Single Number Database, E.164 Range database, Call Type Blocking (CTB) Subscriber Number database, CTB General Controlled Number database, and CTB List database, each database being deployed and provisioned to meet the specific data requirements of an individual portion of the triggerless call treatment service handler.

The CLIV database is provided for storing network access information for originating call attempts. Essentially, the purpose of this data is to provide the ability to store, per network subscriber, whether or not the subscriber is allowed access into the signaling network. In an exemplary embodiment, the CLIV database preferably contains the following data: (i) Start Range, (ii) End Range, (iii) List Type, and (iv) Locked Indication. It should be apparent that when the "Start Range" attribute is exactly the same as the "End Range" attribute, single subscriber numbers are implemented. Further, "Locked Indication" may be dependent on the value of the "List Type" attribute, which can be a valid list or an invalid list.

The IMSI database may be provided for storing Mobile Subscriber Identification Number (MSIN) information for mobile location updates. The purpose of this data is to provide the ability to map the MSIN information to additional routing information (i.e., a Routing Number). The following data may be included in an exemplary IMSI database implementation: (i) MSIN, (ii) Routing Number, (iii) Nature of Address, and (iv) Numbering Plan.

The E.164 Single Number database is required to store subscriber numbers in accordance with the E.164 numbering plan. The purpose of this data is to provide the ability to associate E.164 numbers (i.e., subscriber numbers) with the routing information necessary to support the routing requirements of the deployed call treatment service. In an exemplary embodiment, this database includes the following components: (i) Subscriber Number, (ii) Subscriber Type, (iii) Transition Indicator, and (iv) one or more Routing Numbers. By way of implementation, the "Subscriber Number" may comprise a predetermined length of decimal digits (for instance between 1 and 12 digits). The "Subscriber Type" attribute is used to distinguish between fixed wireline subscribers and mobile subscribers, and may include reference to such conditions as whether the subscriber is Imported, Ported, Non-Ported or Regular. The "Transition Indicator" attribute is an indication that the subscriber has changed Subscriber Type status recently.

Analogous to the E.164 Single Number database, the E.164 Range database includes ranges of subscriber numbers provided in accordance with the E.164 numbering plan. Preferably, this database contains the "Start Range" and "End Range" attributes in addition to the E.164 Single Number attributes set forth above.

The CTB Subscriber Number database may be provisioned to store both single and ranges of directory numbers in accordance with the E.164 numbering plan. The purpose of this data is to restrict single and ranges of E.164 numbers (i.e., blocks of subscriber numbers, which can be called party numbers or calling party numbers) for specific Call Types (as may be defined by Service Keys). Essentially, those Call Types that are restricted for a subscriber number are provided with a Release Cause value associated with the Service Key. By way of exemplary implementation, the CTB Subscriber Number database may contain the following data: (i) Start Range, (ii) End Range, (iii) one or more Service Keys, (iv) one or more Call-Type-specific Release Cause values, (v) Custom List ID, (vi) Custom-List-specific Release Cause value, (vii) System List ID, and (viii) System-List-specific Release Cause value. As an example, up to 20 Service Key values, each having a predetermined number of Release Causes may be provided for each subscriber of the triggerless call treatment service.

The CTB List database may also be provisioned to store both single and ranges of numbers that are associated with lists of restricted numbers. The purpose of this data is to restrict access to single and ranges of numbers associated with a list ID. Two different types of lists may be provided for each controlled subscriber: system lists or custom lists. Examples of lists include: "Don't Call" lists, service areas with high fraud, certain 900-number service lists, and the like. Calls to these list numbers may be treated as defined by Release Cause values associated with the Custom List ID or System List ID in the CTB Subscriber Number database.

The CTB General Controlled Numbers database is also capable of storing both single and ranges of numbers. The purpose of this data is to restrict access to single and ranges of numbers (i.e., blocks of general controlled numbers) for all subscribers. In other words, calls to specific numbers or ranges of numbers will be blocked for any subscriber. Applications include illegal telecom providers, callback providers, countries without service agreements, et cetera. With respect to call treatment, appropriate Release Cause value information is provided for a controlled number or number range.

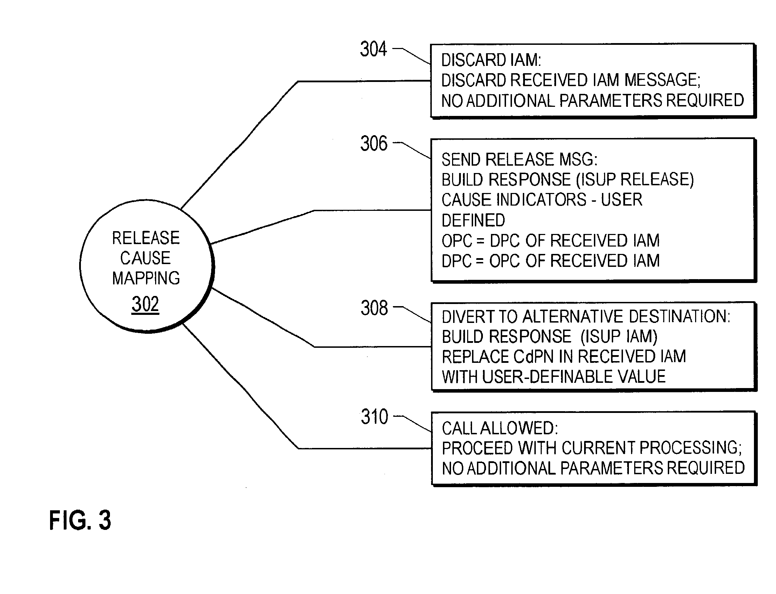

As set forth in detail above, Release Cause value information is provided by way of database provisioning which may be utilized for effectuating several service variants within the overall triggerless call treatment service methodology of the present invention. The provisioned Release Cause value information, therefore, needs to be mapped to appropriate routing information based on the specific service type as well as the signaling message's parametric information. FIG. 3 depicts an exemplary Release Cause mapping scheme 302 for use in accordance with the teachings of the present invention. In general, the mapping scheme provides for different actions to be taken depending on the value of a Release Cause that is returned from a database query. Reference numeral 304 refers to an action taken which directs the service logic to discard the incoming IAM signaling message generated pursuant to a call by a controlled subscriber. As indicated in FIG. 3, no additional parameters are required for effectuating this response. When a response comprises sending a Release (REL) message (block 306), the response may be built based on user-defined cause indicators. The OPC and DPC values of the REL message are respectively set to the DPC and OPC values of the received IAM. Where the call is to be diverted (i.e., re-routed) to an alternative destination, a downstream IAM message is built wherein the CdPN in the incoming IAM message is replaced with a user-defined value (block 308). On the other hand, where the call is to be continued without modification, current call processing is maintained with no further additional parameters being required, as the subscriber is allowed (block 310).

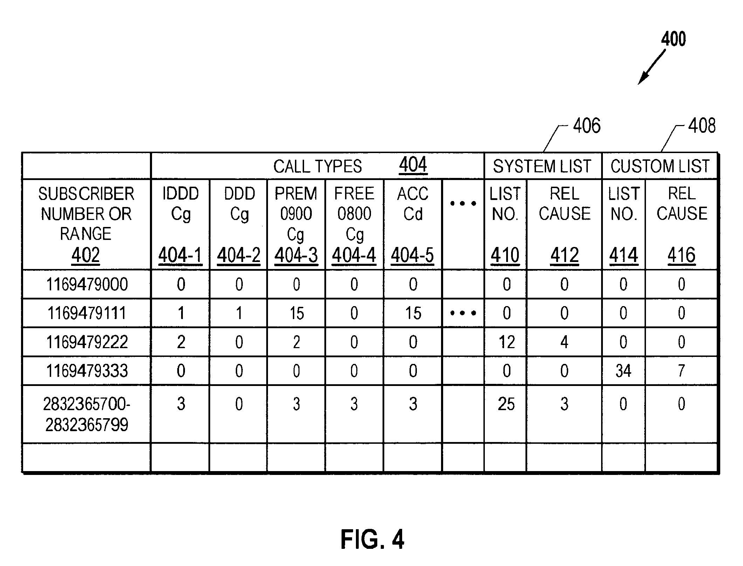

Referring now to FIG. 4, depicted therein is an exemplary embodiment of a database portion 400 for use in conjunction with the teachings of the present invention. By way of implementation, the database portion 400 may be provided as a memory-based storage structure operable to store a list of subscriber numbers and/or ranges 402, each subscriber number or range having associated therewith at least one Release Cause value based on Call Types 404, system lists 406 and custom lists 408. For example, Release Cause values may be provided for several Call Types (each identified with a Service Key), such as international dialing 404-1, long distance dialing 404-2, premium services 404-3, 800-number services 404-4, automatic collect calling 404-5, and the like. Release Cause values of some of these Call Types may be activated based on the CgPN or Cg, indicating that the call treatment service is calling-party-specific. For other Call Types, it is the CdPN or Cd that is verified for appropriate call treatment (i.e., called-party-specific service). In general, the Release Cause values may be provisioned for the party that is responsible for paying. For instance with respect to the ACC Call Type 404-5, it is the CdPN of a controlled collect call that is used for database query in order to determine the Release Value, which in turn is mapped to appropriate routing information.

With respect to system and custom lists, each subscriber number or range of numbers is associated with a list number and corresponding Release Cause value. Reference numerals 410 and 412 refer to a system list portion 406 of the database 400. Likewise, reference numerals 414 and 416 exemplify a custom list portion 408 of the database 400. It should be apparent that in a typical implementation, a subscriber number or range of numbers may satisfy more than one list.

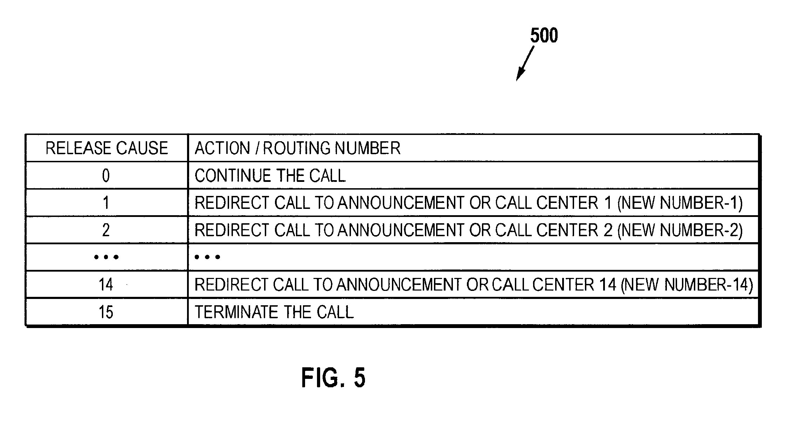

FIG. 5 depicts an exemplary embodiment of another database portion 500 for mapping Release Cause values to new routing numbers for use in conjunction with the teachings of the present invention. Again, the database portion 500 may be implemented as a memory-based storage structure. Further, the subscriber profile database portion 400 described above and the Release Cause mapping database portion 500 may be integrated into an overall database system operable to be queried by the call treatment service logic of the present invention.

As shown in FIG. 5, up to 16 Release Cause values are individually mapped. In general, each Release Cause value is mapped to a corresponding response action that requires a new routing number (to redirect the call to a call center or an announcement system, for example), except where the call is to be continued (Release Cause = 0) or where the call is to be terminated (Release Cause = 15).

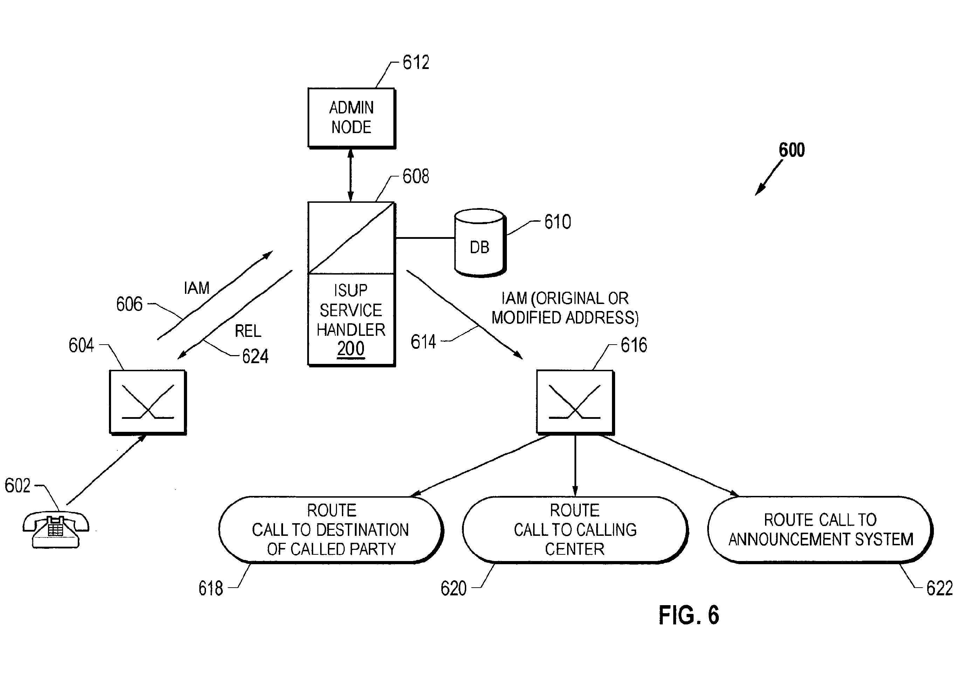

FIG. 6 depicts an exemplary embodiment of a telecommunications network portion for effectuating a triggerless call treatment system and method in accordance with the teachings of the present invention. When a calling party, as exemplified by the telephony equipment 602, attempts to originate a controlled service call to a called party, a local switch 604 serving the calling party 602 generates an ISUP IAM message 606 to an STP node 608 as part of the requisite signaling during call setup. The STP node 608 is provided with the triggerless service capability by means of call treatment service handler 200, whose database(s) 610 and service logic are provisioned by an administration (ADMIN) node 612 coupled thereto. Those skilled in the art will recognize that ADMIN node 612 and STP 608 may be coupled together via a separate network for carrying operations, administration and maintenance control traffic, and further that ADMIN node 612 may be provided with appropriate man-machine interfaces for provisioning the STP's linksets, databases, and service handlers. If the incoming IAM message 606 is received on a linkset enabled and provisioned for the triggerless call treatment service, depending on results obtained from database query by the service logic, a downstream IAM message 614 may be propagated to another switch 616. The downstream IAM message 614 may include the original or modified destination address, responsive to which the downstream switch 616 can route the call to the called party destination 618, route the call to a calling center 620, or route the call to a suitable announcement system 622. Also, if the triggerless service handler logic determines that the call needs to be terminated or blocked, a REL message 624 may be propagated back to the originating switch 604, which will disconnect the call.

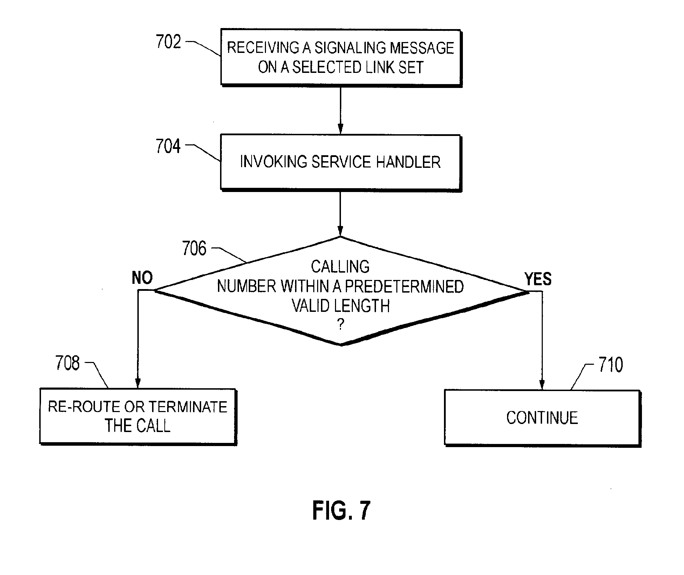

FIG. 7 depicts a flow chart of the various operations of an embodiment of a calling number validation method of the present invention. The method is operable to redirect or terminate an incoming call depending upon the calling number's length. A signaling message is received on a selected linkset coupled to an STP pursuant to a call originated by a party (block 702). Responsive to the signaling message's contents, service logic is invoked at the STP (block 704). A determination is made if the calling number of the call is within a predetermined valid length (decision block 706). For instance, a conditionality that the calling number be comprised of greater than a selected number of digits may be evaluated by the service logic. Another conditionality may be that the calling number be comprised of a length that has fewer than a selected number of digits. Regardless of the actual calling number length conditionality tested, if the length satisfies it, the call processing may proceed to continue (block 710). Otherwise, the call may be terminated or re-directed based on the Release Cause value implementation associated therewith (block 708).

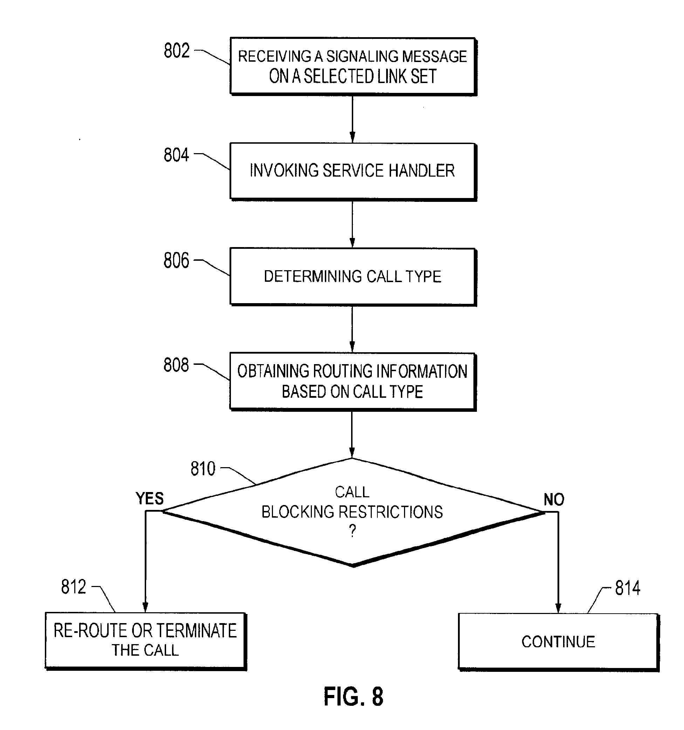

FIG. 8 depicts a flow chart of the various operations of an embodiment of a call treatment method of the present invention based on Call Type. Similar to the service methodology set forth above, a signaling message is received on a selected linkset coupled to an STP pursuant to a call originated by a party (block 802). Responsive to the signaling message's contents, service logic is invoked at the STP (block 804). A determination is made regarding the Call Type of the call based on its Service Key (block 806). Responsive to the signaling message's contents, i.e., CdPN, CgPN, Service Key, etc., the service logic is operable to obtain routing information from a local database (block 808). If call blocking restrictions apply (decision block 810), the call is treated by the STP in accordance therewith using the appropriate routing number information to either re-route or terminate the call (block 812). Otherwise, the call processing may proceed to continue (block 814).

Based upon the foregoing Detailed Description, it should be readily apparent that the triggerless call treatment service of the present invention can be generalized to provide a menu of services to subscribers based on conditionalities relating to the signaling message's contents as filtered at the STP. These conditionalities may include, e.g., call number length, Call Type, controlled lists and numbers, et cetera, which may be used for determining appropriate call routing information. Accordingly, several benefits may be realized by the network operators such as, e.g., selective network access, real-time call validation, selective call blocking (for instance, blocking calls from subscribers in debt), filtering of calls to illegal destinations, et cetera.

It is believed that the operation and construction of the present invention will be apparent from the foregoing Detailed Description. While one or more of the exemplary embodiments of the invention shown and described have been characterized as being preferred, it should be readily understood that various changes and modifications could be made therein without departing from the scope of the present invention as set forth in the following claims.

## Claims

1. A call treatment method in a telecommunications network, comprising:
receiving, at a Signal Transfer Point (STP) (600) on a selected linkset, a signaling message (606) generated pursuant to a call originated by a party (602);
responsive to said signaling message's contents, invoking service logic (200) at said STP (608), said service logic (200) operating to determine routing information based at least in part upon a portion of said signaling message's contents; and
treating said call by said STP (608) depending on said routing information obtained from a local database (610).

2. The call treatment method as set forth in claim 1, wherein said operation of treating said call comprises terminating said call.

3. The call treatment method as set forth in claim 1, wherein said operation of treating said call comprises re-routing said call to a call center.

4. The call treatment method as set forth in claim 1, wherein said operation of treating said call comprises re-routing said call to an announcement system.

5. The call treatment method as set forth in claim 1, claim 2, claim 3 or claim 4, wherein said portion of said signaling message's contents comprises a Call Type of said call.

6. The call treatment method as set forth in claim 1, claim 2, claim 3 or claim 4, wherein said routing information is dependent upon validating the length of a calling number associated with said party (602).

7. A call treatment system in a telecommunications network, comprising:
means for receiving, at a Signal Transfer Point (606) generated pursuant to a call originated by a calling party (602) towards a called party;
means, responsive to said signaling message's contents, for invoking service logic (200) at said STP (608), said service logic (200) operating to obtain routing information from a local database (610); and
means for treating said call by said STP (608) depending on said routing information obtained from said local database (610).

8. The call treatment system as set forth in claim 7, wherein said routing information is based at least in part upon said call's Call Type.

9. The call treatment system as set forth in claim 8, wherein said call's Call Type comprises a Call Type selected from the group consisting of: a local dialing call, a long distance call, an international call, a 900-number call, an 800-number call, a carrier-selection-based call, and an automatic collect call.

10. The call treatment system as set forth in claim 7, wherein said routing information is dependent upon validating the length of said call's calling number.
